# EUROPEAN PATENT SPECIFICATION

(11) **EP 0 953 700 B1**
(45) Date of publication and mention of the grant of the patent: **14.07.2004**
(21) Application number: 99105788.6
(22) Date of filing: 22.03.1999
(51) Int. Cl.: E05B 45/00, E05B 67/00, B62H 5/00

(54) **Anti-theft device for motorcycle**
Diebstahlsicherung für Motorrad
Antivol de motocycle

(30) Priority: 28.04.1998 JP 11879398
(43) Date of publication of application: 03.11.1999
(73) Proprietor: Honda Giken Kogyo Kabushiki Kaisha, Minato-ku, Tokyo (JP)
(72) Inventor: Sugioka, Kouichi, 4-1 Chuo 1-chome, Wako-shi, Saitama (JP)
(74) Representative: Liska, Horst, Dr.-Ing.

(56) References cited:
- EP-A- 0 492 742
- EP-A- 0 579 842
- EP-A- 0 628 472
- DE-A- 19 714 620
- DE-U- 9 111 001
- US-A- 4 340 007
- US-A- 5 274 353

## Description

This invention relates to improvements to a motorcycle with an anti-theft device.

US 4 340 007 A and DE 91 11 001 U disclose an anti-theft device wherein: an inner cable is fitted into an outer cable; a first end of said inner cable is fixed to a first end of said outer cable; a second end of said inner cable projects from a second end of said outer cable and is connected to said outer cable via a resilient member, thereby maintaining said inner cable in a tensioned state; both of said outer and inner cables are fixedly attached to a motorcycle body; a switch is disposed at the second end of said inner cable; and an alarm unit emits an alarm when said switch is turned on if said inner cable is cut, to be used with a bicycle, for example.

An anti-theft device for a motorcycle has been proposed in Japanese Patent Laid-open No. Sho. 60-226979 entitled "Anti-theft Device for Vehicle", for example.

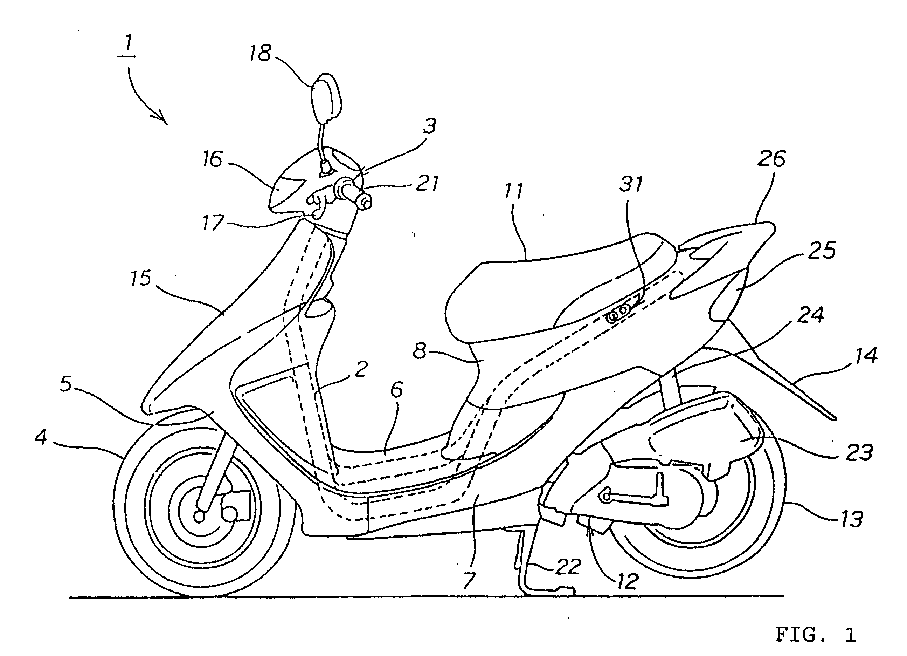

In this anti-theft device A, when an anti-theft wire including a conductor that continuously remains active is cut, disconnection thereof is detected and an alarm will be emitted. As shown in Figs. 1, 3, 4 and 5 of the publication, the anti-theft device A comprises: a lock 1 attached to a seat frame 3; sockets 5 and 6 attached to the lock 1; plugs 8 and 9 connected to the sockets 5 and 6; an anti-theft wire 2 connected to the plugs 8 and 9 via opposite ends thereof; a conductor 11 fitted in the anti-theft wire 2; a non-conductor 12; a wire 14; and a battery 18 supplying power to the conductor 11.

With the foregoing related art, the battery 18 should continuously supply power to the conductor 11 of the anti-theft device A. If the device A remains active for a long period of time, the battery 18 unfavorably consumes a lot of power.

The anti-theft wire 2 is independent from the lock 1 and may be easily lost.

Further, the anti-theft device A including the conductor 11, non-conductor 12 and wire 14 may be expensive.

The present invention is therefore intended to provide a motorcycle with an anti-theft device of the type defined above, which can be stored invisible from the outside and can be easily detached therefrom.

According to the invention, there is provided a motorcycle provided with an anti-theft device wherein: an inner cable is fitted into an outer cable; a first end of said inner cable is fixed to a first end of said outer cable; a second end of said inner cable projects from a second end of said outer cable and is connected to said outer cable via a resilient member, thereby maintaining said inner cable in a tensioned state; both of said outer and inner cables are fixedly attached to a motorcycle body; a switch is disposed at the second end of said inner cable; and an alarm unit emits an alarm when said switch is turned on if said inner cable is cut, wherein: a luggage compartment is positioned under a seat which is opened and closed; a cable housing groove is formed on a top edge of said luggage compartment; and said outer and inner cables are detachably housed in the cable housing groove.

When the inner cable is cut, it is freed from the outer cable by the resilient member, and activates the switch via the second end, so that the alarm unit emits an alarm.

An alarm is emitted from the alarm unit when the inner cable is illegally cut, is freed from the outer cable by the resilient member, and activates the switch via the second end thereof. The anti-theft device having a simple structure can reliably protect the motorcycle against theft, and can be manufactured at a reduced cost.

The second ends of the outer and inner cables are connected to the body frame, which is effective in preventing the cable from being lost compared with when the cable is independent from the body frame. Further, it is not necessary to keep the anti-theft device active while the motorcycle is in use. This is effective in reducing power consumption of the battery, for example.

The outer and inner cables are housed in the cable housing groove of the luggage compartment under the seat and are invisible from the outside, which can improve an external appearance of the motorcycle.

Further, the outer and inner cables housed in the cable housing groove can be easily detached therefrom compared with when they are housed in the luggage compartment.

The anti-theft device has the outer and inner cables housed in the cable housing groove under the seat, which makes the outer and inner cables invisible from outside, and improves the external appearance of the motorcycle.

Both the outer and inner cables can be easily disengaged from the cable housing groove compared with when they are housed in the luggage compartment with other articles. Further, the cables do not occupy any space in the luggage compartment.

The invention will be described with reference to an embodiment shown on the accompanying drawings. The drawings should be observed in the orientation of the reference numerals.
Fig. 1 is a side view of the motorcycle to which the invention is applied.
Fig. 2 is a perspective view of the anti-theft device according to the invention.
Fig. 3 is a sectional view of the anti-theft device, taken along line 3-3 in Fig. 2.
Fig. 4 shows the operation of the anti-theft device of the invention.
Figs. 5(a) and 5(b) show how the anti-theft device is activated and de-activated under a normal situation.
Figs. 6(a) and 6(b) show how the anti-theft device is operated to emit an alarm when the cable is illegally cut.

Fig. 1 is a side view of a motorcycle 1 to which the invention is applicable. The motorcycle 1 comprises: a body frame 2; a handlebar 3 movably attached to the front part of the body frame 2; a front wheel 4 attached under the handlebar 3; a front mudguard 5 covering the front wheel 4; a footrest 6; a pair of side covers 7 covering the opposite side edges of the footrest 6 and body frame 2 (only one side cover is shown in Fig. 1); a frame cover 8; a seat 11 positioned on the frame cover 8; a power unit 12 including an engine and a transmission, and positioned under the seat 11; a.rear wheel 13 driven by the power unit 12; and a rear mudguard 14 covering the rear wheel 13.

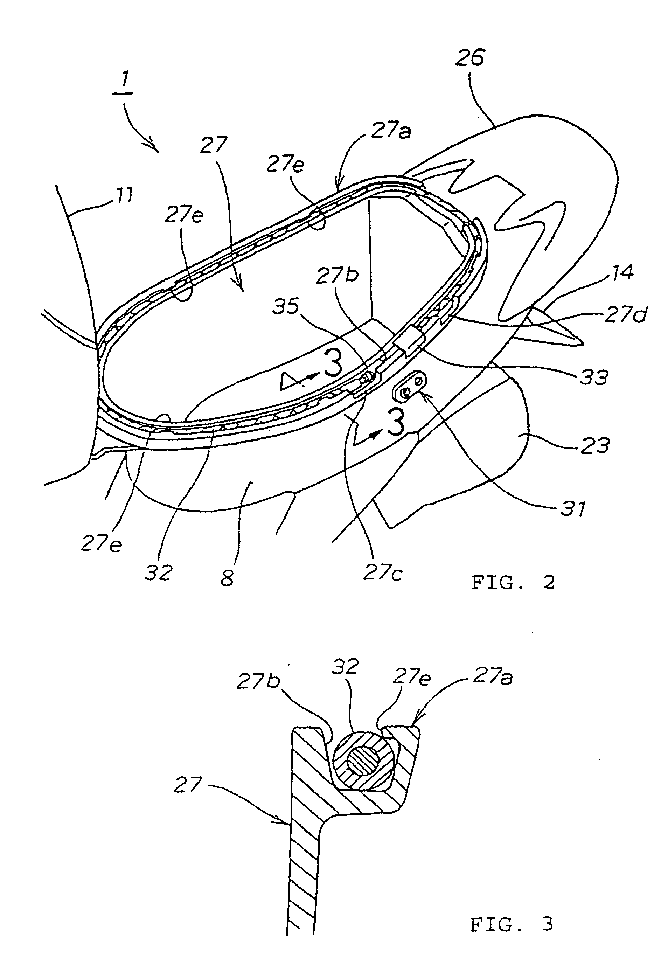

Further, the motorcycle 1 is provided with a cable attaching/detaching unit 31 constituting an anti-theft device 30 which will be described with reference to Figs. 2 to 4.

In Fig. 1, the remaining reference numerals denote the following; 15 a front cover; 16 a headlight; 17 a brake lever; 18 a mirror; 21 handgrips (only one handgrip is shown); 22 a center stand; 23 an air cleaner; 24 a rear suspension; 25 a rear combination lamp; and 26 a rear spoiler.

Fig. 2 is a perspective view of the anti-theft device 30 according to the invention. A luggage compartment 27 is positioned under the seat 11 in order to house a helmet, and has a top edge 27a extending outward in the shape of a flange. A cable housing groove 27b (called the "groove 27b") is formed on the top edge 27a, thereby detachably housing a cable 32 via which the motorcycle 1 is fastened to a structure such as a pole or bar. Further, the top edge 27a is provided with: a case 33 for fixing a second end of the cable 32; a first dent 27a for easily gripping a first end of the cable 32; a second dent 27d for passing the cable 32 when it is disengaged from the groove 27b; and a plurality of pawls 27e for reliably holding the cable 32 in the groove 27b.

The edge 27a of the luggage compartment 27 also serves as a sealing surface for the seat 11.

The case 33 is attached to the body frame 2 (shown in Fig. 1) via the luggage compartment 27.

Alternatively, the case 33 may be attached to the body frame 2 using a metal stay (not shown).

Fig. 3 is a sectional view taken along line 3-3 in Fig. 2, showing the top edge 27a having a plurality of pawls 27e.

As described so far, the cable 32 is housed in the groove 27b under the seat 11 and is not visible from the outside, which improves the external appearance of the motorcycle 1.

Further, the cable 32 can be easily disengaged from the groove 27b compared with when it is housed in the luggage compartment 27 with other goods. In addition, the cable 32 does not occupy any space in the luggage compartment 27.

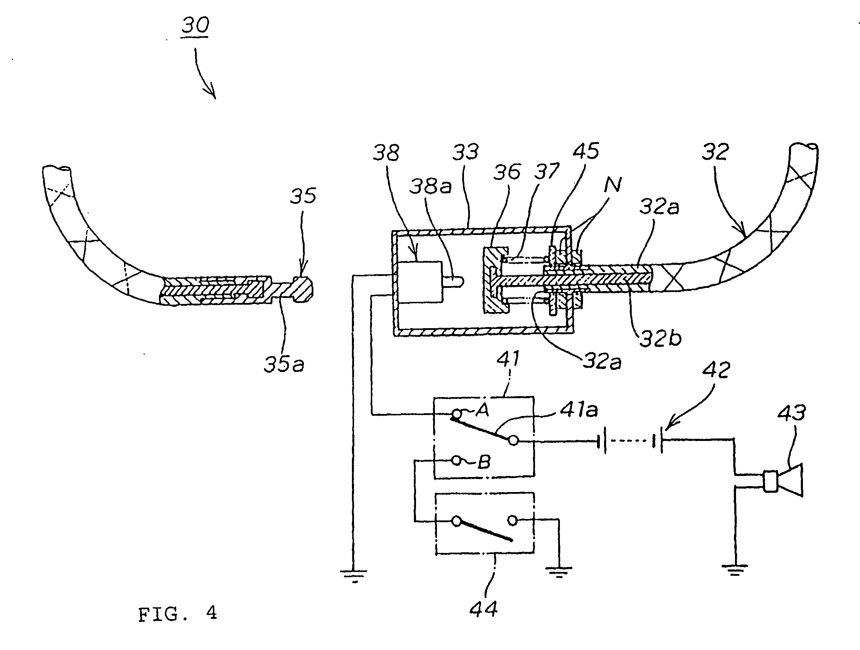

Referring to Fig. 4, the anti-theft device 30 comprises: the cable 32; a hook 35 attached to the first end of the cable 32; the case 33; a spring bearing 36 attached to the second end of the cable 32 and housed in the case 33; a coil spring 37 interposed between the spring bearing 36 and the second end of the cable 32, and functioning as a resilient member; a push switch 38 which is turned on when a movable member 38a facing the spring bearing 36 is pressed; a selecting switch 41 for activating the push switch 38; a battery 42 for supplying power to the selecting switch 41; a horn 43 for issuing an alarm and receiving power from the battery 42; a horn switch 44 selectively turned on by the selecting switch 41; and the groove 27b of the luggage compartment 27 and cable attaching/detaching unit 31, both of which are described with reference to Fig. 2.

As shown in Fig. 4, the cable 32 includes a hollow outer cable 32a and an inner cable 32b movably fitted in the outer cable 32a.

The outer cable 32a has a male screw 32c at its second end, which is screwed with nuts N in order to attach the outer cable 32a to the case 33.

The hook 35 is attached to the first ends of the outer and inner cables 32a and 32b, and is engaged with the cable attaching/detaching unit 31 (shown in Fig. 2) via a small diameter tip 35a thereof.

The spring bearing 36 is attached to the second end of the inner cable 32b projecting via the second end of the outer cable 32a.

The coil spring 37 is interposed between the spring bearing 36 and a washer 45 in contact with one of the nuts N, and resiliently urges the spring bearing 36 in order to pull the inner cable 32b out of the outer cable 32a.

The selecting switch 41 operates a movable contact 41a in order to selectively connect ① the push switch 38 with the horn 43, or ② the horn switch 44 with the horn 43, and is actuated in response to the operation of the main switch. For instance, when the main switch is at the position OFF or LOCK, the selecting switch 41 brings the movable contact 41a into contact with a stationary contact A. Conversely, when the main switch is at the position ON, the selecting switch 41 brings the movable contact 41a into contact with a stationary contact B.

Therefore, as long as the main switch is at the position OFF or LOCK, the horn 43 will emit an alarm if the motorcycle 1 is stolen.

The battery 42, horn 43 and horn switch 44 may be realized using components of the motorcycle 1.

As described so far, the second end of the cable 32 is connected to the body frame 2 (shown in Fig. 1) via the case 33 and luggage compartment 27 (shown in Fig. 2), which is effective in protecting the cable 32 against being lost compared with when the cable 32 is provided as a member independent from the body frame 1.

Further, the anti-theft device 30 does not have to remain active during the use of the motorcycle 1, which can effectively reduce power consumption of the battery 42, for example.

The anti-theft device 30 operates in the following manner.

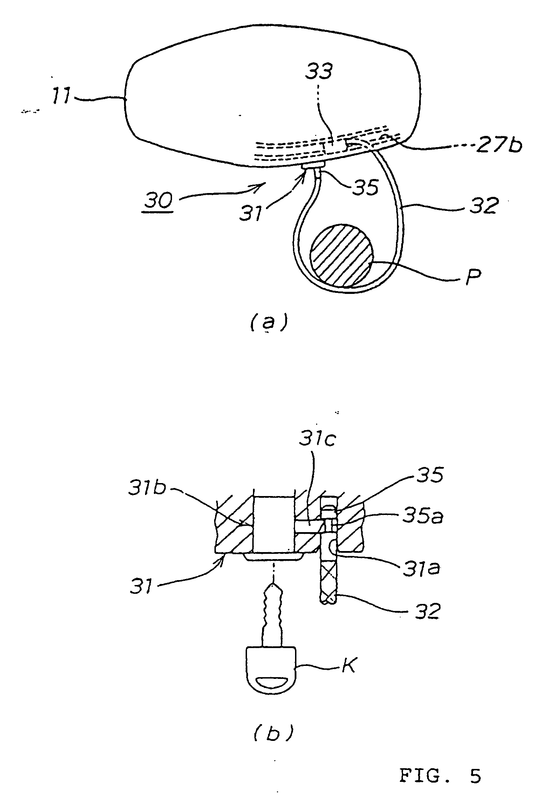

Figs. 5(a) and 5(b) show how the anti-theft device 30 is used. Specifically, Fig. 5(a) shows that the anti-theft device 30 is put into use while the motorcycle 1 is parked. Fig. 5(b) is an enlarged sectional view of the cable attaching/detaching unit 31.

In order to activate the anti-theft device 30 for the parked motorcycle 1 (shown in Fig. 1), the rider lifts the seat 11 (shown in Fig. 2), grasps the hook 35 by inserting his or her finger into the first dent 27c of the luggage compartment 27, and pulls the cable 32 out of the groove 27b.

In this state, the rider fits the cable 32 through the second dent 27d without applying an unnecessary force to the case 33, and then returns the seat 11 to the original state.

The cable 32 is made to extend round a pole or the like as shown in Fig. 5(a).

Thereafter, the hook 35 of the cable 32 is inserted into an opening 31a on the cable attaching/detaching unit 31, as shown in Fig. 5(b).

In this state, a projection 31c protruding from a lock mechanism 31b fits into the small diameter portion 35a of the hook 35, which enables the hook 35 to remain locked in the cable attaching/detaching unit 31.

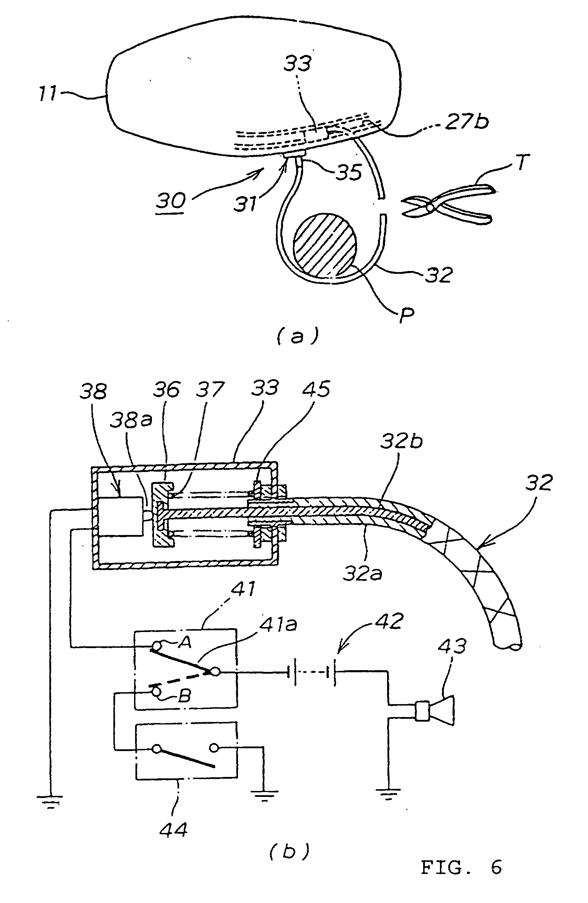

Figs. 6(a) and 6(b) are drawings for describing the operation of the anti-theft. Specifically, Fig. 6(a) shows the state in which the an attempt has been made to steal the motorcycle, and Fig. 6(b) shows the inside of the case and the alarm unit in the situation (a).

Fig. 6(a) shows that the cable 32 of the motorcycle 1 (shown in Fig. 1) is cut by cutting pliers T or the like. In this state, the main switch of the motorcycle 1 has been set to the position OFF or LOCK.

When the cable 32 is cut, the inner cable 32b is freed from the restrained state, and is moved toward the push switch 38 together with the spring bearing 36 because of the resilient force of the coil spring 37.

As a result, the spring bearing 36 pushes the movable member 38a of the push switch 38, thereby activating the push switch 38.

The movable contact 41a of the selecting switch 41 is in contact with the stationary contact A as shown by a solid line. Therefore, when the push switch 38 is turned on, a current is supplied to the horn 43 from the battery 42, which enables the horn 43 to emit an alarm.

In order to stop the alarm, the user of the motorcycle 1 (Fig. 1) sets the main switch to the position ON.

Thereafter, the movable contact 41a comes into contact with the stationary contact B as shown by a dashed line. In such a case, the horn 43 can be sounded by activating the horn switch 44 during the running of the motorcycle 1, for example.

Referring to Fig. 5(b), the hook 35 of the cable 32 can be disengaged from the cable attaching/detaching unit 31 by inserting a key K into the locking mechanism 31b and turning the key K therein in order to fit the projection 31c into the locking mechanism 31b. The hook 35 will then be released out of the opening 31a.

When the inner cable 32b in the cable 32 is illegally cut, it is freed from the outer cable 32a by the coil spring 37. Then the inner cable 32b activates the push switch 38 via the second end thereof, which enables the horn 43 to emit an alarm. This simple arrangement can reliably protect the motorcycle against theft, and is manufactured at a reduced cost.

In the foregoing embodiment, the groove is formed on the top edge of the luggage compartment under the seat in order to house the cable. Alternatively, the outer and inner cables may be housed in a groove formed along the top edge of a luggage compartment having a lid.

Further, even when there is no luggage compartment under the seat, the outer and inner cables may be housed in a space which is covered by the seat. This is effective in maintaining an attractive appearance of the motorcycle.

The simple and inexpensive anti-theft device can reliably protect the motorcycle against theft. The cable fixedly connected to the motorcycle body will not be easily lost compared with when the cable is independent from the motorcycle body. Further, it is possible to reduce power consumption of the battery.

## Claims

1. A motorcycle provided with an anti-theft device wherein: an inner cable (32b) is fitted into an outer cable (32a); a first end of said inner cable is fixed to a first end of said outer cable; a second end of said inner cable projects from a second end of said outer cable and is connected to said outer cable via a resilient member (37), thereby maintaining said inner cable in a tensioned state; both of said outer and inner cables are fixedly attached to a motorcycle body (2); a switch (38) is disposed at the second end of said inner cable; and an alarm unit (43) emits an alarm when said switch is turned on if said inner cable is cut,
wherein: a luggage compartment (27) is positioned under a seat (11) which is opened and closed; a cable housing groove (27b) is formed on a top edge (27a) of said luggage compartment; and said outer and inner cables are detachably housed in the cable housing groove.

## Patentansprüche

1. Mit einer Antidiebstahlvorrichtung versehenes Kraftrad, worin: ein Innenkabel (32b) in einem Außenkabel (32a) sitzt; ein erstes Ende des Innenkabels an einem ersten Ende des Außenkabels befestigt ist; ein zweites Ende des Innenkabels von einem zweiten Ende des Außenkabels vorsteht und mit dem Außenkabel über ein elastisches Element (37) verbunden ist, um hierdurch das Innenkabel in einem gespannten Zustand zu halten; wobei sowohl das Außen- als auch das Innenkabel an einem Kraftradkörper (2) fest angebracht sind; ein Schalter (38) an dem zweiten Ende des Innenkabels angeordnet ist; und eine Alarmeinheit (43) einen Alarm abgibt, wenn der Schalter eingeschaltet wird, falls das Innenkabel durchtrennt wird,
worin ein Gepäckraum (27) unter einem Sitz (11) angeordnet ist, der geöffnet und geschlossen wird; eine Kabelaufnahmenut (27b) an einem Oberrand (27a) des Gepäckraums ausgebildet ist; und die Außen- und Innenkabel in der Kabelaufnahmenut abnehmbar aufgenommen sind.

## Revendications

1. Motocyclette comportant un dispositif anti-vol, dans laquelle : un câble interne (32b) est monté dans un câble externe (32a) ; une première extrémité dudit câble interne est fixée à une première extrémité dudit câble externe ; une seconde extrémité dudit câble interne fait saillie depuis une seconde extrémité dudit câble externe, et est connectée audit câble externe par l'intermédiaire d'un élément résilient (37), maintenant ainsi ledit câble interne dans un état tendu ; lesdits câbles externe et interne sont tous deux assujettis, de façon fixe, à une carrosserie de motocyclette (2) ; un commutateur (38) est disposé à la seconde extrémité dudit câble interne ; et une unité d'alarme (43) émet une alarme lorsque ledit commutateur est sur marche alors que ledit câble interne est coupé,
dans laquelle : un compartiment à bagages (27) est positionné au-dessous d'un siège (11) qui est ouvert et fermé ; une rainure de logement de câbles (27b) est formée sur un bord supérieur (27a) dudit compartiment à bagages ; et lesdits câbles externe et interne sont logés, de façon amovible, dans la rainure de logement de câbles.
